(19) Europäisches Patentamt
European Patent Office
Office européen des brevets

(11) **EP 2 339 279 B1**

(12) **EUROPÄISCHE PATENTSCHRIFT**

(45) Veröffentlichungstag und Bekanntmachung des Hinweises auf die Patenterteilung:
**26.09.2012 Patentblatt 2012/39**

(51) Int Cl.:
***F27D 17/00*** *(2006.01)* ***G01N 33/20*** *(2006.01)*

(21) Anmeldenummer: **10194684.6**

(22) Anmeldetag: **13.12.2010**

(54) **Verfahren zur indirekten Bestimmung der Abgasrate bei metallurgischen Prozessen**

Method for indirectly determining the waste gas rate of metallurgical processes

Procédé de détermination indirecte du taux de gaz d'échappement dans des procédés métallurgiques

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2009 DE 102009060255**

(43) Veröffentlichungstag der Anmeldung:
**29.06.2011 Patentblatt 2011/26**

(73) Patentinhaber: **SMS Siemag AG 40237 Düsseldorf (DE)**

(72) Erfinder: **Voj, Lukas Peter 50858, Köln (DE)**

(74) Vertreter: **Klüppel, Walter Hemmerich & Kollegen Patentanwälte Hammerstraße 2 57072 Siegen (DE)**

(56) Entgegenhaltungen:
**WO-A1-2009/030192**

EP 2 339 279 B1

**Beschreibung**

Die Erfindung betrifft ein Verfahren zur indirekten Bestimmung eines Abgas-Volumenstroms eines Hochtemperaturprozesses, insbesondere eines metallurgischen Hochtemperaturprozesses, am Ursprung eines Abgasstranges mittels quantitativer Stoffanalyse.

Stand der Technik

Strömungstechnische Informationen über das Abgas, beispielsweise ein Volumen- oder Massedurchfluss, stellen wichtige Parameter zur Steuerung und/oder Regelung von metallurgischen Prozessen dar.

Aus der WO 2009/030192 ist ein Verfahren zur indirekten Bestimmung der Abgasrate bei metallurgischen Prozessen bekannt, bei dem einem Stickstoff enthaltenden Abgas zunächst ein Referenzgas, zum Beispiel Helium, strömungstechnisch so weit vor einem Analyseort dosiert zugesetzt wird, dass ein gründliches Durchmischen des Abgases und des Referenzgases gewährleistet ist, wobei anschließend eine quantitative Stickstoffanalyse und eine quantitative Referenzgasanalyse erfolgen, aus deren Ergebnissen unter Berücksichtigung der Dosierung des Referenzgases die Abgasrate bestimmt wird.

In der Praxis sind die Messeinrichtungen so weit stromabwärts in dem Abgasstrang bzw. der diesen Abgasstrang begrenzenden Abgasleiteinrichtung angeordnet, dass in der Abgasleiteinrichtung stromaufwärts der Messeinrichtungen ablaufende Zusatzprozesse, zum Beispiel zur Reinigung und/oder Nachbehandlung des Abgases, die Bestimmung des Volumenstroms des Abgases am Ursprung eines Abgasstranges, also die Bestimmung der tatsächlichen Abgasrate, erschweren bzw. deren Ergebnis verfälschen.

Es ist daher Aufgabe der Erfindung ein Verfahren und eine entsprechende Einrichtung zur indirekten Bestimmung des Abgas-Volumenstroms eines Hochtemperaturprozesses bereitzustellen, das/die eine zuverlässige und einfache Bestimmung des Abgas-Volumenstroms ermöglicht.

Offenbarung der Erfindung

Die Lösung der Aufgabe erfolgt erfindungsgemäß durch die Merkmale der Ansprüche 1 und 7. Vorteilhafte Ausgestaltungen der Erfindung sind in den Unteransprüchen angegeben.

Bei dem erfindungsgemäßen Verfahren wird dem Abgas in einem Abschnitt des Abgasstrangs ein mit einer ersten Abgaskomponente des Abgases reagierendes Zusatzgas zur Nachbehandlung des Abgases zugeführt, wobei (a) stromabwärts des Abschnitts der Anteil mindestens einer auch durch die Reaktion des Zusatzgases mit der ersten Abgaskomponente resultierenden zweiten Abgaskomponente am Abgas und ein Volumenstrom des Abgases nach der Nachbehandlung ermittelt werden, (b) stromaufwärts des Abschnitts der Anteil der ersten Abgaskomponente und der Anteil der zweiten Abgaskomponente am Abgas ermittelt werden und (c) der Abgas-Volumenstrom am Ursprung des Abgasstranges aus dem stromaufwärts des Abschnitts ermittelten Anteil der ersten und zweiten Abgaskomponente, dem stromabwärts des Abschnitts ermittelten Anteil der zweiten Abgaskomponente und dem Volumenstrom nach der Nachbehandlung bestimmt wird.

Gemäß einer bevorzugten Ausführungsform der Erfindung ist vorgesehen, dass das Zusatzgas Sauerstoff ($O_2$) ist oder zumindest aufweist und die Nachbehandlung eine Oxidation von Abgaskomponenten ist. Die Oxidation von Abgaskomponenten ist eine weit verbreitete Form der Abgas-Nachbehandlung.

Insbesondere ist vorgesehen, dass das Zusatzgas Luft ist. Diese Luft ist bevorzugt die Umgebungsluft des Abgasstrangs. Diese wird insbesondere durch einen Spalt einer Abgasleiteinrichtung als Nebenluft gezogen.

Gemäß einer bevorzugten Ausführungsform der Erfindung ist vorgesehen, dass die mindestens eine zweite Abgaskomponente Kohlenmonoxid (CO) und/oder Kohlendioxid ($CO_2$) ist. Diese Abgaskomponenten entstehen auch durch eine als Oxidation ausgebildete Nachbehandlung.

Gemäß einer weiteren bevorzugten Ausführungsform der Erfindung ist vorgesehen, dass die erste Abgaskomponente Methan ($CH_4$) ist. Methan ist eine bei Hochtemperaturprozessen, insbesondere bei metallurgischen Hochtemperaturprozessen, häufig auftretende Abgaskomponente.

Insbesondere ist vorgesehen, dass der metallurgische Hochtemperaturprozess ein Prozess zur Herstellung von Eisen und/oder Stahl ist. Solche metallurgische Hochtemperaturprozesse finden zum Beispiel in einem Elektrolichtbogenofen statt.

Die Erfindung betrifft weiterhin eine Abgasleiteinrichtung zum Leiten von Abgas eines Aggregats zur Durchführung metallurgischer Hochtemperaturprozesse in einem Abgasstrang. Erfindungsgemäß ist vorgesehen, dass die Abgasleiteinrichtung in einem Abschnitt eine Zuführvorrichtung zum Zuführen eines mit einer ersten Abgaskomponente des Abgases reagierenden Zusatzgases zur Nachbehandlung des Abgases, eine stromaufwärts des Abschnitts angeordnete erste Messeinrichtung zur Ermittlung des Anteils der ersten Abgaskomponente und des Anteils mindestens einer auch durch die Reaktion des Zusatzgases mit der ersten Abgaskomponente resultierenden zweiten Abgaskomponente, eine stromabwärts des Abschnitts angeordnete zweite Messeinrichtung zur Ermittlung des Anteils der zweiten Abgaskomponente und eine dritte Messeinrichtung zur Ermittlung des Volumenstroms des Abgases nach der Nachbehandlung aufweist.

Gemäß einer bevorzugten Ausführungsform der Erfindung weist die Abgasleiteinrichtung eine Auswerteeinrichtung zur Bestimmung des Abgas-Volumenstroms am Ursprung des Abgasstranges aus den ermittelten Größen der Messeinrichtungen auf. Die Abgasleiteinrichtung mit der Auswerteeinrichtung ist insbesondere derart ausgebildet, dass sie zur Durchführung des vorstehend genannten Verfahrens geeignet ist.

Gemäß einer weiteren bevorzugten Ausführungsform der Erfindung ist vorgesehen, dass das Zusatzgas Sauerstoff ist oder zumindest aufweist und die Nachbehandlung eine Oxidation von Abgaskomponenten ist. Die Oxidation von Abgaskomponenten ist eine weit verbreitete Form der Abgas-Nachbehandlung.

Insbesondere ist vorgesehen, dass die Zuführvorrichtung ein Spalt zum Zuführen von Umgebungsluft ist. Diese wird insbesondere durch einen Spalt einer Abgasleiteinrichtung als Nebenluft gezogen.

Insbesondere ist vorgesehen, dass die erste Abgaskomponente Methan ist. Methan ist eine bei Hochtemperaturprozessen, insbesondere bei metallurgischen Hochtemperaturprozessen, häufig auftretende Abgaskomponente.

Mit Vorteil ist vorgesehen, dass die mindestens eine zweite Abgaskomponente Kohlenmonoxid und/oder Kohlendioxid ist. Diese Abgaskomponenten entstehen auch durch eine als Oxidation ausgebildete Nachbehandlung.

Insbesondere ist vorgesehen, dass der metallurgische Hochtemperaturprozess ein Prozess zur Herstellung von Eisen und/oder Stahl ist. Diese metallurgischen Hochtemperaturprozesse finden zum Beispiel in einem Elektrolichtbogenofen statt.

Die Erfindung betrifft schließlich auch ein Aggregat zur Durchführung metallurgischer Hochtemperaturprozesse, insbesondere einen Elektrolichtbogenofen, mit einer vorstehend genannten Abgasleiteinrichtung.

Kurze Beschreibung der Zeichnungen

Nachfolgend wird die Erfindung unter Bezugnahme auf die anliegende Zeichnung anhand einer bevorzugten Ausführungsform näher erläutert. Die einzige Figur zeigt einen Elektrolichtbogenofen mit einer erfindungsgemäßen Abgasleiteinrichtung.

Ausführungsform(en) der Erfindung

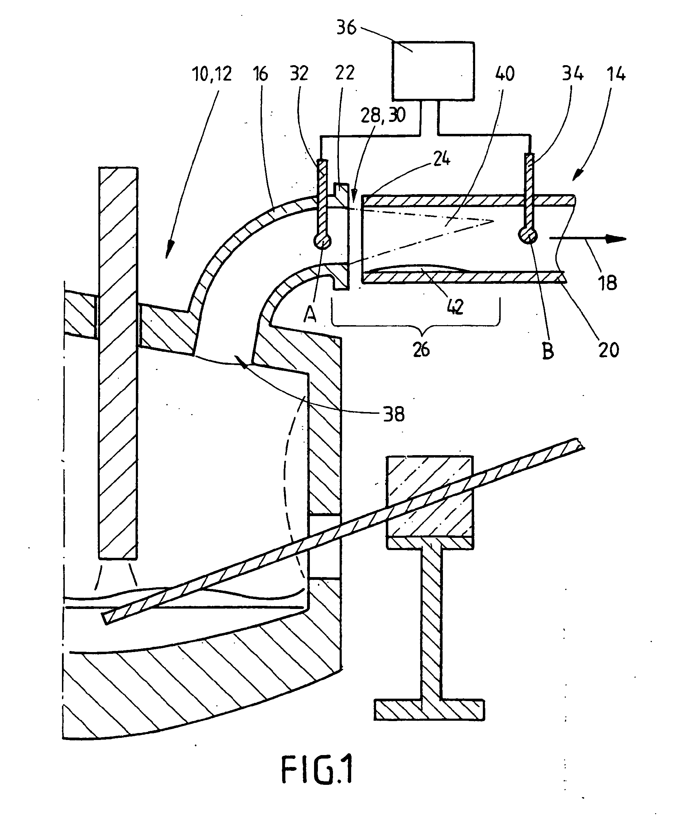

Die Figur 1 zeigt ein als Elektrolichtbogenofen 10 ausgebildetes Aggregat 12 zur Durchführung metallurgischer Hochtemperaturprozesse mit einer den Abgasstrang begrenzenden Abgasleiteinrichtung 14. Die Abgasleiteinrichtung 14 weist ein einstückig mit dem Elektrolichtbogenofen 10 ausgebildetes Krümmerelement 16 und ein sich stromabwärts des sich ergebenden Abgasstroms (Pfeil 18) angeordnetes Abgasrohr 20 auf. Zwischen dem Endbereich 22 des Krümmerelements 16 und dem Anfangsbereich 24 des Abgasrohrs 20 bildet sich in einem Abschnitt 26 der Abgasleiteinrichtung 14 beziehungsweise des Abgasstrangs ein als Krümmerspalt bezeichneter Spalt 28 aus. Dieser Spalt 28 ist eine Zuführvorrichtung 30 zum Zuführen des mit einer ersten Abgaskomponente des Abgases reagierenden sauerstoffhaltigen Zusatzgases Luft.

Die Abgasleiteinrichtung 14 weist weiterhin eine stromaufwärts des Abschnitts 26 angeordnete erste Messeinrichtung 32 an der Messstelle A zur Ermittlung des Anteils einer ersten Abgaskomponente und des Anteils mindestens einer auch aus der Reaktion des Zusatzgases mit der ersten Abgaskomponente resultierenden zweiten Abgaskomponente, eine stromabwärts des Abschnitts 26 angeordnete zweite Messeinrichtung 34 an der Messstelle B zur Ermittlung des Anteils der zweiten Abgaskomponente und - ebenfalls stromabwärts des Abschnitts und vorzugsweise an der Messstelle B - eine dritte (nicht gezeigte) Messeinrichtung zur Ermittlung des Volumenstroms des Abgases nach der Nachbehandlung, also stromabwärts des Abschnitts 26, auf. Die erste Messeinrichtung 32, die zweite Messeinrichtung 34 und die dritte Messeinrichtung sind mess- und signaltechnisch mit einer Auswerteeinrichtung 36 zur Bestimmung des Abgas-Volumenstroms am Ursprung 38 des Abgasstranges ($dV^A/dt$) aus den ermittelten Größen der ersten bis dritten Messeinrichtung 32, 34 (der Anteil der ersten Abgaskomponente, z.B. ($X_{CH4}^A$), und der Anteil mindestens einer auch durch die/aus der Reaktion des Zusatzgases mit der ersten Abgaskomponente resultierenden zweiten Abgaskomponente, z.B. ($X_{CO}^A$, $X_{CO2}^A$), am/im Abgas, der Anteil der auch durch die Reaktion des Zusatzgases mit der ersten Abgaskomponente resultierenden zweiten Abgaskomponente ($X_{CO}^B$, $X_{CO2}^B$) am Abgas und ein Volumenstrom des Abgases ($dV^B/dt$) nach der Nachbehandlung) verbunden.

Die Größe des Abschnitts wird in diesem Beispiel von dem Prozess der Nachbehandlung, nämlich insbesondere der Größe des Nachverbrennungskegels 40 und entsprechender Ablagerungen 42, bestimmt.

Es ergibt sich folgende Funktion: Die Abgasleiteinrichtung 14 mit der Auswerteeinrichtung 36 kann zur indirekten Bestimmung eines Abgas-Volumenstroms des metallurgischen Hochtemperaturprozesses am Ursprung 38 des Abgasstranges durchgeführt werden. Dazu wird dem Abgas in dem Abschnitt 26 das mit der ersten Abgaskomponente $CH_4$ (Methan) des Abgases reagierende Zusatzgas Luft durch den Spalt 28 zur Nachbehandlung des Abgases zugeführt, wobei

- stromabwärts des Abschnitts 26 der Anteil der auch durch die Reaktion des Zusatzgases Luft mit der ersten Abgaskomponente $CH_4$ resultierenden zweiten A bgaskomponenten CO und $CO_2$ am/im Abgas und ein Volumenstrom des Abgases nach der Nachbehandlung ermittelt werden,
- stromaufwärts des Abschnitts 26 der Anteil der ersten Abgaskomponente $CH_4$ und der Anteil der zweiten Abgaskomponenten CO und $CO_2$ am Abgas ermittelt werden und
- der Abgas-Volumenstrom am Ursprung 38 des Abgasstranges aus dem stromaufwärts des Abschnitts 26 ermittelten Anteil der ersten und zweiten Abgaskomponenten $CH_4$, CO und $CO_2$, dem stromabwärts des Abschnitts ermittelten Anteil der zweiten Abgaskomponenten CO und $CO_2$ und dem Volumenstrom nach der Nachbehandlung mittels der Formel:

$$dV^A / dt = dV^B / dt \cdot (x_{CO}^{\ B} + x_{CO_2}^{\ B}) / (x_{CO}^{\ A} + x_{CO_2}^{\ A} + x_{CH_4}^{\ A})$$

bestimmt wird.

**Patentansprüche**

1. Verfahren zur indirekten Bestimmung eines Abgas-Volumenstroms eines Hochtemperaturprozesses am Ursprung eines Abgasstranges mittels quantitativer Stoffanalyse, **dadurch gekennzeichnet, dass** dem Abgas in einem Abschnitt des Abgasstrangs ein mit einer ersten Abgaskomponente des Abgases reagierendes Zusatzgas zur Nachbehandlung des Abgases zugeführt wird, wobei
stromabwärts des Abschnitts der Anteil mindestens einer auch durch die Reaktion des Zusatzgases mit der ersten Abgaskomponente resultierenden zweiten Abgaskomponente am Abgas und ein Volumenstrom des Abgases nach der Nachbehandlung ermittelt werden,
stromaufwärts des Abschnitts der Anteil der ersten Abgaskomponente und der Anteil der zweiten Abgaskomponente am Abgas ermittelt werden und
der Abgas-Volumenstrom am Ursprung des Abgasstranges aus dem stromaufwärts des Abschnitts ermittelten Anteil der ersten und zweiten Abgaskomponente, dem stromabwärts des Abschnitts ermittelten Anteil der zweiten Abgaskomponente und dem Volumenstrom nach der Nachbehandlung bestimmt wird.

2. Verfahren nach Anspruch 1, **dadurch gekennzeichnet, dass** das Zusatzgas Sauerstoff ist oder zumindest aufweist und die Nachbehandlung eine Oxidation von Abgaskomponenten ist.

3. Verfahren nach Anspruch 1 oder 2, **dadurch gekennzeichnet, dass** die mindestens eine zweite Abgaskomponente Kohlenmonoxid und/oder Kohlendioxid ist.

4. Verfahren nach einem der vorhergehenden Ansprüche, **dadurch gekennzeichnet, dass** das Zusatzgas Luft ist.

5. Verfahren nach einem der vorhergehenden Ansprüche, **dadurch gekennzeichnet, dass** die erste Abgaskomponente Methan ist.

6. Verfahren nach einem der vorhergehenden Ansprüche, **dadurch gekennzeichnet, dass** der metallurgische Hochtemperaturprozess ein Prozess zur Herstellung von Stahl ist.

7. Abgasleiteinrichtung (14) zum Leiten von Abgas eines Aggregats (12) zur Durchführung metallurgischer Hochtemperaturprozesse in einem Abgasstrang, wobei die Abgasleiteinrichtung (14) in einem Abschnitt (26) eine Zuführvorrichtung (30) zum Zuführen eines mit einer ersten Abgaskomponente des Abgases reagierenden Zusatzgases zur Nachbehandlung des Abgases, eine stromaufwärts des Abschnitts (26) angeordnete erste Messeinrichtung (32) zur Ermittlung des Anteils der ersten Abgaskomponente und des Anteils mindestens einer auch durch die Reaktion des Zusatzgases mit der ersten Abgaskomponente resultierenden zweiten Abgaskomponente, eine stromabwärts des Abschnitts (26) angeordnete zweite Messeinrichtung (34) zur Ermittlung des Anteils der zweiten Abgaskomponente und eine dritte Messeinrichtung zur Ermittlung des Volumenstroms des Abgases nach der Nachbehandlung aufweist.

8. Abgasleiteinrichtung nach Anspruch 7, **gekennzeichnet durch** eine Auswerteeinrichtung (36) zur Bestimmung des Abgas-Volumenstroms am Ursprung (38) des Abgasstranges aus den ermittelten Größen der Messeinrichtungen (32, 34).

9. Abgasleiteinrichtung nach Anspruch 7 oder 8, **dadurch gekennzeichnet, dass** das Zusatzgas Sauerstoff ist oder zumindest aufweist und die Nachbehandlung eine Oxidation von Abgaskomponenten ist.

10. Aggregat zur Durchführung metallurgischer Hochtemperaturprozesse, insbesondere Elektrolichtbogenofen (10), mit einer Abgasleiteinrichtung (14) nach einem der Ansprüche 7 bis 9.

**Claims**

1. Method for indirect determination of a waste gas volume flow of a high-temperature process at the origin of a waste gas stream by means of quantitative substance analysis, **characterised in that** an added gas, which reacts with a first waste gas component of the waste gas, for post-treatment of the waste gas is added to the waste gas in a section of the waste gas stream, wherein downstream of the section the proportion of at least one second waste gas component, which also results from the reaction of the added gas with the first waste gas component, at the waste gas and a volume flow of the waste gas after the post-treatment are detected, upstream of the section the proportion of the first waste gas component and the proportion of the second waste gas component at the waste gas are detected and the waste gas volume flow at the origin of the waste gas stream is determined from the proportion, which is detected upstream of the section, of the first and second waste gas components, the proportion, which is detected downstream of the section, of the second waste gas component and the volume flow after the post-treatment.

2. Method according to claim 1, **characterised in that** the added gas is or at least comprises oxygen and the post-treatment is oxidation of waste gas components.

3. Method according to claim 1 or 2, **characterised in that** the at least one second waste gas component is carbon monoxide and/or carbon dioxide.

4. Method according to any one of the preceding claims, **characterised in that** the added gas is air.

5. Method according to any one of the preceding claims, **characterised in that** the first waste gas component is methane.

6. Method according to any one of the preceding claims, **characterised in that** the metallurgical high-temperature process is a process for the production of steel.

7. Waste gas conducting device (14) for conducting waste gas of a unit (12) for carrying out metallurgical high-temperature processes in a waste gas stream, wherein the waste gas conducting device (14) comprises, in a section (26), a feed device (30) for feeding an added gas, which reacts with a first waste gas component of the waste gas, for post-treatment of the waste gas, a first measuring device (32), which is arranged upstream of the section (26), for detecting the proportion of the first waste gas component and the proportion of at least one second waste gas component, which also results from reaction of the added gas with the first gas component, a second measuring device (34), which is arranged downstream of the section (26), for detecting the proportion of the second waste gas component and a third measuring device for detecting the volume flow of the waste gas after the post-treatment.

8. Waste gas conducting device according to claim 7, **characterised by** an evaluating device (36) for determining the waste gas volume flow at the origin (38) of the waste gas stream from the detected magnitudes of the measuring devices (32, 34).

9. Waste gas conducting device according to claim 7 or 8, **characterised in that** the added gas is or at least comprises oxygen and the post-treatment is oxidation of waste gas components.

10. Unit for carrying out metallurgical high-temperature processes, particularly electric arc furnace (10), with a waste gas conducting device (14) according to any one of claims 7 to 9.

**Revendications**

1. Procédé pour la détermination indirecte d'un courant volumique de gaz d'échappement d'un procédé à haute température à l'origine d'un système de gaz d'échappement au moyen d'une analyse quantitative des matières, **caractérisé en ce qu'**on achemine aux gaz d'échappement dans un tronçon du système de gaz d'échappement un gaz d'addition qui réagit avec un premier composant des gaz d'échappement, pour le traitement ultérieur des gaz d'échappement, dans lequel : en aval du tronçon, on calcule la fraction d'au moins un deuxième composant des gaz d'échappement qui résulte également de la réaction du gaz d'addition avec le premier composant des gaz d'échappement dans les gaz d'échappement et un courant volumique des gaz d'échappement après le traitement ultérieur ; en amont du tronçon, on calcule la fraction du premier composant des gaz d'échappement et la fraction du deuxième composant des gaz d'échappement dans les gaz d'échappement, et on détermine le courant volumique des gaz d'échappement à l'origine du système de gaz d'échappement à partir de la fraction calculée en amont du tronçon, du premier et du deuxième composant des gaz d'échappement, de la fraction calculée en aval du tronçon, du deuxième composant des gaz d'échappement et du courant volumique après le traitement ultérieur.

2. Procédé selon la revendication 1, **caractérisé en ce que** le gaz d'addition est ou au moins présente de l'oxygène, et le traitement ultérieur est une oxydation des composants des gaz d'échappement.

3. Procédé selon la revendication 1 ou 2, **caractérisé en ce que** ledit au moins un deuxième composant des gaz d'échappement est le monoxyde de carbone et/ou le dioxyde de carbone.

4. Procédé selon l'une quelconque des revendications précédentes, **caractérisé en ce que** le gaz d'addition est l'air.

5. Procédé selon l'une quelconque des revendications précédentes, **caractérisé en ce que** le premier composant des gaz d'échappement est le méthane.

6. Procédé selon l'une quelconque des revendications précédentes, **caractérisé en ce que** le procédé métallurgique à haute température est un procédé pour la production de l'acier.

7. Mécanisme de guidage des gaz d'échappement (14) pour guider des gaz d'échappement d'un agrégat (12) pour la mise en oeuvre de procédés métallurgiques à haute température dans un système de gaz d'échappement, dans lequel le mécanisme de guidage des gaz d'échappement (14) présente : dans un tronçon (26), un dispositif d'amenée (30) pour acheminer un gaz d'addition qui réagit avec un premier composant des gaz d'échappement, pour le traitement ultérieur des gaz d'échappement ; un premier mécanisme de mesure (32) disposé en amont du tronçon (26), pour le calcul de la fraction du premier composant des gaz d'échappement et de la fraction d'au moins un deuxième composant des gaz d'échappement qui résulte également de la réaction du gaz d'addition avec le premier composant des gaz d'échappement ; un deuxième mécanisme de mesure (34) disposé en amont du tronçon (26) pour le calcul de la fraction du deuxième composant des gaz d'échappement et un troisième mécanisme de mesure pour le calcul du courant volumique des gaz d'échappement après le traitement ultérieur.

8. Mécanisme de guidage des gaz d'échappement selon la revendication 7, **caractérisé par** un mécanisme d'évaluation (36) pour la détermination du courant volumique des gaz d'échappement à l'origine (38) du système de gaz d'échappement à partir des valeurs calculées des mécanismes de mesure (32, 34).

9. Mécanisme de guidage des gaz d'échappement selon la revendication 7 ou 8, **caractérisé en ce que** le gaz d'addition est ou au moins présente de l'oxygène et le traitement ultérieur est une oxydation des composants des gaz d'échappement.

10. Agrégat pour la mise en oeuvre de procédés métallurgiques à haute température, en particulier des fours à arc électrique (10), comprenant un mécanisme de guidage des gaz d'échappement (14) selon l'une quelconque des revendications 7 à 9.

FIG.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009030192 A